(19) Europäisches Patentamt

European Patent Office

Office européen des brevets

(11) **EP 0 697 685 A1**

(12) **EUROPÄISCHE PATENTANMELDUNG**

(43) Veröffentlichungstag:
21.02.1996 Patentblatt 1996/08

(51) Int. Cl.$^6$: **G08G 1/052**, G01P 3/66

(21) Anmeldenummer: 95110957.8

(22) Anmeldetag: 13.07.1995

(84) Benannte Vertragsstaaten:
AT BE CH DE DK ES FR GB GR IE IT LI LU NL PT SE

(30) Priorität: 04.08.1994 DE 4427549

(71) Anmelder: Weiss-Electronic GmbH Elektronische Regel- und Steuergeräte, H. Weiss
D-54294 Trier (DE)

(72) Erfinder:
• Beck, Hans-Peter
  D-54298 Welschbillig (DE)
• Thiel, Heinz
  D-54293 Trier-Ehrang (DE)
• Luban, Guido
  D-54309 Newel-Butzweiler (DE)

(74) Vertreter: Grommes, Karl F., Dr.
D-56068 Koblenz (DE)

(54) **Verfahren und Vorrichtung zur Bestimmung der Geschwindigkeit von Fahrzeugen**

(57)   Die Erfindung betrifft ein Verfahren und eine Vorrichtung zur Bestimmung der Geschwindigkeit ($v = s/\delta t$) von Fahrzeugen, wobei mit Hilfe von mindestens zwei im Abstand (s) zueinander angeordneter Sensoren (1,2,27,28) die zum Überfahren beider Sensoren (1,2,27,28) benötigte Zeit $\delta t = t_1 - t_2$ ermittelt wird.

Der Erfindung liegt die Aufgabe zugrunde, ein Geschwindigkeitsmeßverfahren anzugeben, welches einfach realisierbar ist, mit dem genaue Meßwerte ermittelbar sind und bei dem äußere Einflüsse des Straßenbelages weitgehend vernachlässigt werden können.

Dieses wird im wesentlichen dadurch erreicht, daß als Meßsensoren (1,2,27,28) statt der üblichen piezoresistiven Drucksensoren Induktionsschleifen verwendet werden. Dabei wird allerdings -anders als bei bekannten Induktionsschleifenanordnungen- nicht die Frequenzverschiebung eines aus Schleifeninduktivität und Kondensator bestehenden Schwingkreises beim Überfahren (Bedämpfung) der Schleifen (1,2,27,28) gemessen, sondern der zeitliche Verlauf der jeweiligen Schleifenimpedanz für eine vorgegebene Frequenz (Überfahrkurve) (22,23), und aus diesem Verlauf wird anschließend der entsprechende Zeitbezugswert $t_1$, $t_2$ ermittelt.

F I G. 1

EP 0 697 685 A1

## Beschreibung

### Technisches Gebiet

Die Erfindung betrifft ein Verfahren zur Bestimmung der Geschwindigkeit von Fahrzeugen mit Hilfe von mindestens zwei im Abstand (s) zueinander angeordneter Sensoren gemäß den Merkmalen des Oberbegriffs des Anspruchs 1. Die Erfindung bezieht sich ferner auf eine Vorrichtung zur Durchführung dieses Verfahrens.

### Stand der Technik

Bei stationären Geschwindigkeitsüberwachungsanlagen werden in der Regel zwei in Fahrtrichtung hintereinander angeordnete piezoresistive Drucksensoren (Piezo-Kabel) verwendet, die direkt an der Fahrbahnoberfläche montiert sind. Bei überfahren der beiden Piezo-Kabel werden entsprechende Spannungsimpulse erzeugt, welche zwei Zeitbezugswerte $t_1$, $t_2$ definieren. Aus dem vorgegebenen Abstand s der Sensoren und der Differenz $\delta t = t_2 - t_1$ ermittelt dann eine Auswerteeinheit die Fahrzeuggeschwindigkeit $v = s/\delta t$.

Nachteilig ist bei derartigen Drucksensoren vor allem, daß sie gegen äußere Einflüsse sehr empfindlich sind. So werden sie insbesondere im Winter beim Bestreuen eis- und schneebedeckter Fahrbahnen mit Splitt und Salz leicht beschädigt und müssen dann mit hohem Kostenaufwand ersetzt werden.

Eine Verwendung von Induktionsschleifen-Sensoren anstatt der erwähnten piezoresistiven Drucksensoren würde zwar zu Sensoranordnungen führen, die weitgehend unempfindlich gegen äußere Einflüsse sind, weil die Induktionsschleifen in ca. 5 bis 10 cm Tiefe in die Fahrbahndecke eingelassen werden können, doch ist die Messung der Fahrzeuggeschwindigkeit mit derartigen bekannten Sensoranordnungen in der Regel zu ungenau. Denn üblicherweise bilden die Induktionsschleifen den induktiven Teil des Schwingkreises eines LC-Oszillatores, dessen Kondensator Bestandteil einer Auswertevorrichtung ist, die sich an einem vom Meßort getrennten Ort befindet und über relativ lange Zuleitungen mit den Induktionsschleifen verbunden ist. Die Empfindlichkeit einer derartigen Sensoranordnung wird aber durch die Einkopplung von Fremdsignalen, etwa benachbarter Induktionsschleifen, sowie durch die ohmschen Zuleitungswiderstände, aber auch durch den erforderlichen niederohmigen Ausgang der Schleifenendstufe wesentlich beeinträchtigt.

### Darstellung der Erfindung

Der Erfindung liegt daher die Aufgabe zugrunde, ein Verfahren zur Bestimmung der Geschwindigkeit von Fahrzeugen anzugeben, welches einfach realisierbar ist, mit dem genaue Meßwerte ermittelbar sind und bei dem äußere Einflüsse des Straßenbelages weitgehend vernachlässigt werden können. Der Erfindung liegt ferner die Aufgabe zugrunde, eine Vorrichtung zur Durchführung dieses Verfahrens anzugeben.

Die vorstehend erwähnte Aufgabe wird erfindungsgemäß hinsichtlich des Verfahrens durch die Merkmale des kennzeichnenden Teils des Anspruchs 1 und hinsichtlich der Vorrichtung durch die Merkmale des kennzeichnenden Teils des Anspruchs 4 gelöst. Weitere besonders vorteilhafte Ausgestaltungen der Erfindung offenbaren die Unteransprüche.

Die Erfindung beruht im wesentlichen auf dem Gedanken, daß als Meßsensoren statt der üblichen piezoresistiven Drucksensoren Induktionsschleifen verwendet werden. Dabei wird allerdings -anders als bei bekannten Induktionsschleifenanordnungen- nicht die Frequenzverschiebung eines aus Schleifeninduktivität und Kondensator bestehenden Schwingkreises beim Überfahren (Bedämpfung) der Spule gemessen, sondern der zeitliche Verlauf der jeweiligen Schleifenimpedanz für eine vorgegebene Frequenz (Überfahrkurve) und aus diesem Verlauf der entsprechende Zeitbezugswert ermittelt.

Besonders genau ist dieses Meßverfahren, wenn zur Gewinnung der Zeitbezugswerte nicht die ansteigende oder abfallende Flanke der entsprechenden Überfahrkurve herangezogen wird, sondern zunächst der Schwerpunkt der jeweiligen Überfahrkurve ermittelt und dann der diesem Wert zugeordnete Zeitwert als Zeitbezugswert für die Zeitdifferenzbestimmung herangezogen wird. Denn die Auswirkungen von Signalstörungen auf diese Zeitbezugswerte sind in der Regel sehr gering.

Besonders vorteilhaft läßt sich das erfindungsgemäße Verfahren bei der häufig geforderten Zweifachmessung anwenden, bei der zwei Geschwindigkeitsmessungen mit unterschiedlicher Zeitbasis erfolgen und anschließend bewertet werden. Hierzu wird lediglich jede der Induktionsspulen mit zwei Impedanzmeßvorrichtungen verbunden, die mit unterschiedlichen Meßfrequenzen betrieben werden. Die Meßvorrichtungen können dabei parallel betrieben werden, so daß -anders als bei Vorrichtungen mit Multiplexern- die Meßwertverarbeitung außerordentlich schnell erfolgen kann.

Die Vorrichtung zur Durchführung der Messung besteht im wesentlichen aus mindestens zwei Induktionsspulen, deren Auswertevorrichtungen jeweils eine Impedanzmeßvorrichtung enthält. Die jeweilige Impedanzvorrichtung weist eine Meßspannungsquelle zur Erzeugung einer Wechselspannung vorgebbarer Frequenz (Meßfrequenz) sowie einen Detektor, der zur Messung der Schleifenspannung einen Synchrongleichrichter mit nachgeschaltetem Tiefpaßfilter enthält, auf. Der Steuereingang des Synchrongleichrichters ist ebenfalls mit der Meßspannungsquelle verbunden.

Da die Induktionsschleife -anders als bei bekannten Schleifenanordnungen- nicht Teil eines Oszillators ist, kann die Schleifenendstufe der Meßspannungsquelle hochohmig ausgeführt werden. Aufgrund der hochohmigen Schleifenendstufe und der hohen Frequenzselektivität des Detektors ist es möglich, eng benachbarte Schleifenanordnungen vorzusehen, ohne daß Störungen durch Fremdsignale und Empfindlichkeitsverlust durch gegenseitigen Energieentzug auftreten.

Der hohe mit den erfindungsgemäßen Detektoren erreichbare störspannungsabstand erlaubt es, auch Motorräder, die in der Regel eine nur schwache Impedanzänderung der Schleife bewirken, zu detektieren.

Besonders vorteilhaft ist die Verwendung eines Analogmultiplizierers als Synchrongleichrichter, da als Steuerspannung direkt die sinusförmige Meßspannung (kleiner Klirrfaktor) verwendet wird. Da im Idealfall nur eine Frequenz in der Steuerfrequenz (Meßfrequenz) enthalten ist, wird nur die im Frequenzgemisch der Eingangsspannung enthaltene Amplitude der Spannung mit der Meßfrequenz ausgewertet und damit alle anderen Störsignale unterdrückt. Synchrongleichrichter, bei denen die Polarität der Eingangsspannung über ein aus der Steuerspannung generiertes Rechtecksignal umgeschaltet wird, sind zwar grundsätzlich auch in Verbindung mit den Detektoren der erfindungsgemäßen Auswertevorrichtung anwendbar, weisen aber den Nachteil auf, daß entsprechend den Anteilen in der Fourierreihe des steuernden Rechtecksignales auch ungeradzahlige Vielfache der Meßfrequenz einen Beitrag zur Ausgangsgleichspannung liefern können. Denn da die Oberwellenanteile eines Rechteckes nur wenig gegenüber der Grundschwingung gedämpft sind, kann dieses zu Störungen in der Gleichspannung durch Demodulation von z.B. Langwellensendern oder Meßfrequenzen der Nachbarschleifen führen.

Da bei den üblichen Synchrongleichrichtern die Ausgangsspannung abhängig ist von der phasenverschiebung zwischen Steuerspannung und Meßspannung (phasenempfindliche Synchrongleichrichter), hat es sich als vorteilhaft erwiesen, die durch die Induktionsschleife und/oder die Zuleitungen bewirkte Phasenverschiebung durch einen einstellbaren -vorzugsweise prozessorgesteuerten-Phasenschieber zu kompensieren. Dieser Phasenschieber kann beispielsweise in die Schleifenendstufe integriert werden. Durch die Kompensation der phasenverschiebung mit Hilfe des Phasenschiebers bewirkt die Gesamtschaltung, daß der Synchrongleichrichter annähernd phasenunabhängig arbeitet, weil sich bei einer eingestellten Phase von 0° bei Bedämpfung Phasenänderungen von weniger als 5° ergeben. Für derart kleine Änderungen der Phase kann aber cos $\phi$ in guter Näherung gleich 1 gesetzt werden.

Statt eines phasenempfindlichen Synchrongleichrichters mit separatem Phasenschieber kann selbstverständlich auch ein phasenunabhängiger Synchrongleichrichter verwendet werden. Derartige Synchrongleichrichter sind allerdings relativ aufwendig herstellbar und daher mit entsprechend hohen Kosten verbunden.

Zur weiteren Auswertung der am Ausgang der an dem Tiefpaßfilter liegenden Signalwerte werden diese über einen Analog/Digital-Wandler einem Microcontroller zugeführt, welcher sowohl den Schwerpunkt der jeweiligen Überfahrkurve, die Zeitbezugswerte und aus diesen Werten die Fahrzeuggeschwindigkeit bestimmt.

Sofern die Meßwerte mehrerer Detektoren mit dem gleichen Microcontroller ausgewertet werden sollen, können die Detektoren in an sich bekannter Weise über einen Multiplexer mit dem Microcontroller bzw. dem vorgeschalteten A/D-Wandler verbunden werden.

Ist eine Mehrfachmessung der Geschwindigkeit mit mehreren voneinander unabhängigen Zeitbasen erforderlich, muß selbstverständlich eine der Anzahl der Zeitbasen entsprechende Anzahl von Taktgeneratoren verwendet werden. Es hat sich in diesem Fall als vorteilhaft erwiesen, mehrere Microcontroller zu verwenden, wobei jeweils ein Microcontroller für eine Geschwindigkeitsmessung der Mehrfachmessung herangezogen wird. Der entsprechende Taktgenerator des jeweiligen Microcontrollers bestimmt dabei die entsprechende Zeitbasis.

Kurze Beschreibung der Zeichnung

Weitere Einzelheiten und Vorteile der Erfindung ergeben sich aus den folgenden anhand von Figuren erläuterten Ausführungsbeispielen. Es zeigen:

Fig. 1                das Blockschaltbild einer erfindungsgemäßen Meßvorrichtung,
Fig. 2                das Blockschaltbild einer Auswertevorrichtung,
Fig. 3                der schematische Verlauf zweier Überfahrkurven zur Ableitung entsprechender Zeitbezugswerte,
Fig. 4a) bis 4c)      schematische Darstellungen mehrerer hintereinander angeordneter Induktionsschleifen zur Festlegung unterschiedlicher Zeitbasen und
Fig. 5                das Blockschaltbild einer erfindungsgemäßen Meßvorrichtung für eine Zweifachmessung der Geschwindigkeit mit zwei unterschiedlichen Zeitbasen.

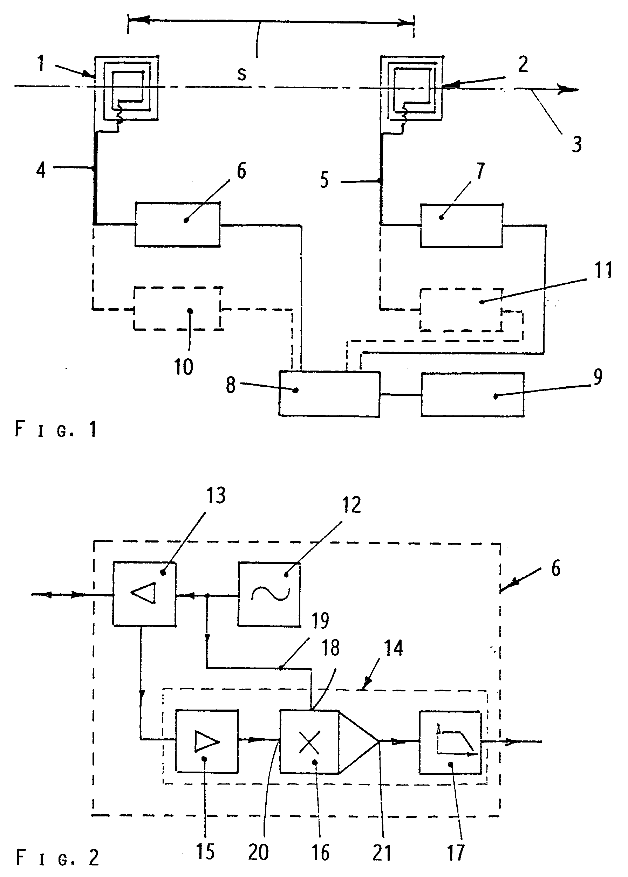

In Fig. 1 sind mit 1 und 2 Induktionsschleifen bezeichnet. Die Induktionsschleifen 1, 2 besitzen voneinander in Fahrtrichtung 3 der Fahrzeuge (nicht dargestellt), deren Geschwindigkeit bestimmt werden soll, den Abstand (Meßbasis) s. Jede der beiden Induktionsschleifen 1, 2 ist über eine Verbindungsleitung 4, 5 mit einer Auswerteeinheit 6 bzw. 7 zur Ermittlung der jeweiligen Schleifenimpedanz Z1, Z2 bzw. der diesen Impedanzen proportionalen Meßwertspannungen $Ua_1$, $Ua_2$ verbunden.

In einem den Auswertevorrichtungen 6 und 7 nachgeschalteten Microcontroller 8 werden anschließend aus den Überfahrkurven $Z_1(t), Z_2(t)$ bzw. $Ua_1(t)$, $Ua_2(t)$ die entsprechenden Zeitbezugswerte $t_1$, $t_2$ und anschließend die Fahrzeuggeschwindigkeit v ermittelt und gegebenenfalls mittels einer Anzeigevorrichtung 9 angezeigt.

Zur Durchführung einer Zweifachmessung der Geschwindigkeit sind in Fig.1 zwei weitere Auswertevorrichtungen 10, 11 gestrichelt dargestellt, die jeweils ebenfalls mit den Induktionsschleifen 1 bzw. 2 und dem Microcontroller 8 verbunden sind.

In Fig.2 ist das Blockschaltbild der Auswertevorrichtung 6 wiedergegeben (die Auswertevorrichtungen 7,10 und 11 weisen einen entsprechenden Aufbau auf). Im wesentlichen handelt es sich bei der Auswertevorrichtung um eine Impedanzmeßvorrichtung, die aus einer Meßspannungsquelle 12 mit nachgeschalteter Schleifenendstufe 13 und einem Detektor 14, zur Messung der Schleifenspannung, besteht.

Der Detektor 14 enthält einen Signalverstärker 15, dessen Ausgangsspannung einem phasenempfindlichen Synchrongleichrichter (Analogmultiplizierer) 16 zugeführt wird, dem seinerseits ein Tiefpaßfilter 17 nachgeschaltet ist. Der jeweilige Steuereingang 18 des Synchrongleichrichters 16 ist über eine elektrische Leitung 19 mit der Meßspannungsquelle 12 verbunden.

Die Schleifenendstufe 13 besteht im wesentlichen aus einem Signalverstärker zur Verstärkung der von der Meßspannungsquelle 12 erzeugten frequenz- und amplitudenstabilen sinusförmigen Wechselspannung und weist einen hochohmigen Ausgang auf. Außerdem enthält die Schleifenendstufe 13 einen Phasenschieber, mittels dessen die Phase der an der Induktionsschleife liegenden Spannungswerte variiert werden kann.

Im folgenden wird näher auf die Funktionsweise der Auswertevorrichtung eingegangen:

Während an dem Eingang 20 des Synchrongleichrichters (Analogmultiplizierer) 16 ohne Störquelle die an der Schleife 1 gemessene und mittels des Verstärkers 15 verstärkte Spannung (im folgenden auch als Meßspannung bezeichnet):

$$U_e(t) = \hat{u}_e * \sin(2\pi f_{st}*t + \phi)$$

liegt, weist die an dem Steuereingang 18 des Synchrongleichrichters 16 befindliche Spannung folgenden Verlauf auf:

$$U_{st}(t) = \hat{u}_{st} * \sin(2\pi f_{st}*t),$$

wobei $f_{st}$ die Frequenz der von der Meßspannungsquelle 12 erzeugten Steuerspannung $U_{st}$ und $\phi$ die Phasenverschiebung zwischen Steuerspannung $U_{st}$ und Meßspannung $U_e$, die mit Hilfe des in der Schleifenendstufe 13 angeordneten Phasenschiebers kompensiert werden kann, bedeuten.

Während die Größen $\hat{u}_{st}$ und $f_{st}$ konstant sind, ändern sich $\hat{u}_e$ und $\phi$ bei Bedämpfung, d.h. beim Überfahren der Induktionsschleife 1 durch ein Fahrzeug.

Für die Spannung $U_a$ am Ausgang 21 des Multiplizierers 16 ergibt sich damit folgender Verlauf:

$$U_a(t) = (U_e(t) * U_{st}(t))/E,$$

wobei E eine Recheneinheit des Multiplizierers (z.B. 10V) ist.

Mit

$$\sin\alpha * \sin\beta = 0{,}5 * [\cos(\alpha-\beta) - \cos(\alpha+\beta)]$$

folgt:

$$U_a(t) = 0{,}5 * \hat{u}_e * \hat{u}_{st}/E * [\cos\phi - \cos(4\pi f_{st}*t+\phi] = U_= + U_\approx.$$

Es entsteht demnach eine Gleichspannung, der eine Wechselspannung mit doppelter Meßfrequenz überlagert ist. Da mit dem Phasenschieber die Phase $\phi$ kompensiert wird, d.h.

$$\phi = 0, \cos(\phi) = 1,$$

ergibt sich:

$$U_a(t) = 0{,}5 * \hat{u}_e * \hat{u}_{st}/E * [1 - \cos(4\pi f_{st}*t] = U_= + U_\approx$$

Die Gleichspannung $U_=$ ist also in diesem Fall bei Bedämpfung unabhängig von der Phase $\phi$.

Enthält die Meßspannung nun durch eine Nachbarschleife eine Störfrequenz von z.B. $f = f_{st} + 5kHz$, so enthält die Ausgangsspannung $U_a(t)$ zwei zusätzliche Frequenzen:

$$f_1 = 5kHz \text{ und } f_2 = 2f_{st} + 5kHz.$$

Das dem Synchrongleichrichter 16 nachgeschaltete Tiefpaßfilter 17 hat nun die Aufgabe, durch Mittelwertbildung alle Spektren, außer der von der Meßfrequenz verursachten Gleichspannung $U_=$, herauszufiltern. Bei einem Tiefpaßfilter mit der Grenzfrequenz $f_{gTP} = 0Hz$ würde sich (theoretisch) eine Ausgangsspannung

$$U_a(t) = U_= = 0,5 * \hat{u}_e * \hat{u}_{st}/E$$

ergeben. Es liefert also nur die Spannung $U_e$ einen Anteil zur Ausgangsspannung des Tiefpaßfilters, deren Frequenz gleich der Steuerfrequenz und damit, wie gewünscht, auch gleich der Meßfrequenz ist. Durch die unendlich große Zeitkonstante des Tiefpaßfilters wären bei dieser Grenzfrequenz allerdings keine zeitlichen Änderungen der Ausgangsspannung möglich.

Für eine Grenzfrequenz $f_{gTP} > 0Hz$ wird nicht mehr eine bestimmte Frequenz, sondern ein Frequenzband aus dem Mischsignal von $U_e$ herausgefiltert. Hinsichtlich der Meßfrequenz verhält sich die Schaltung also wie ein Bandpaß mit der Bandbreite $B = 2 f_{gTP}$ und der Mittenfrequenz $f_M = f_{st} = f_{Meß}$.

Das Tiefpaßfilter 17 bestimmt demnach die Eigenschaften der Gesamtschaltung und muß so ausgelegt werden, daß es die Anforderungen hinsichtlich Anstiegszeit, Sprungantwort, Störunterdrückung usw. erfüllt (z.B. Bessel-TP 4. Ordnung mit $f_{gTP} = 100Hz$).

Betrachtet man den für die Detektion benutzten Gleichspannungsanteil

$$U_= = 0,5 * \hat{u}_e * \hat{u}_{st}/E,$$

erkennt man, daß die Ausgangsspannung proportional zur Amplitude $\hat{u}_e$ der Schleifenspannung $U_e$ (t) ist. Die Induktionsschleife 1 wird aber durch einen großen Widerstand angesteuert (hochohmiger Ausgang der Schleifenendstufe 13), so daß der Strom nahezu konstant ist. Daraus folgt, daß der Gleichspannungsanteil $U_=$ proportional zu dem Betrag der Schleifenimpedanz $|Z|$ ist ($Z = U/I$).

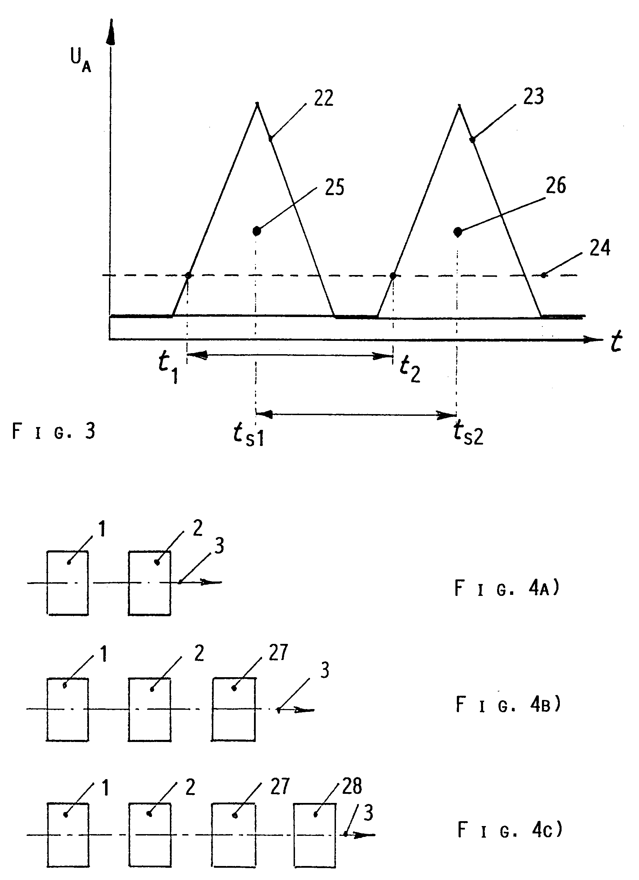

Fig.3 zeigt schematisch den Spannungsverlauf $U_A$ am Ausgang der Auswertevorrichtungen 6 und 7 beim überfahren der Induktionsschleifen 1 und 2 durch ein Kraftfahrzeug. Dabei entspricht die Kurve 22 der mit der Auswertevorrichtung 6 gemessenen Überfahrkurve und die Kurve 23 der mit der Auswertevorrichtung 7 gemessenen Überfahrkurve.

Zur Ableitung der Zeitbezugswerte $t_1$ und $t_2$ kann im einfachsten Fall eine an sich bekannte Schwellenbewertung mit Hilfe des Microcontrollers 8 vorgenommen werden. Hierzu werden die Überfahrkurven 22, 23 mit einem konstanten Schwellenwert 24 verglichen. Sobald die Überfahrkurve 22 den Schwellenwert 24 überschreitet, wird ein erster Zeitbezugswert regeneriert. Überschreitet anschließend die Überfahrkurve 23 ebenfalls den Schwellenwert 24, so wird ein zweiter Zeitbezugswert t2 erzeugt. Die zu bestimmende Überfahrzeit $\delta t$ ergibt sich dann aus $\delta t = t_2 - t_1$.

Schaltungstechnisch kann eine derartige Zeitmeßschaltung durch zwei Komparatoren realisiert werden, die mit einem entsprechenden Flip-Flop verbunden sind. Das Flip-Flop bildet dabei ein $\delta t$ entsprechendes Torsignal, das dann mittels einer Zählvorrichtung vorgegebener Genauigkeit ausgezählt wird. Selbstverständlich kann die Zeitmeßvorrichtung auch softwaremäßig realisiert werden. Da derartige Zeitmeßvorrichtungen hinlänglich bekannt sind, braucht auf ihren Aufbau nicht näher eingegangen werden.

Ein wesentlicher Nachteil der vorstehend beschriebenen Schwellenbewertung zur Ableitung von Zeitbezugswerten besteht darin, daß bereits kleine Störungen in den Überfahrkurven im Bereich der Schwellen 24 eine starke Verfälschung der Geschwindigkeitsmessung verursachen.

Eine exaktere Geschwindigkeitsmessung ergibt sich, wenn das sogenannte Schwerpunktverfahren zur Ableitung der Zeitbezugswerte benutzt wird. Bei diesem Verfahren werden die beiden Überfahrkurven 22, 23 mit Hilfe eines im Microcontroller enthaltenen Integrators (entweder hard- oder softwaremäßig) integriert und dann jeweils die Position des Schwerpunktes 25, 26 (Fig.3) ermittelt. Aus dem zeitlichen Abstand der beiden Kurvenschwerpunkte $\delta t_{sp} = t_{s1} - t_{s2}$ und der Meßbasis s ergibt sich dann die Geschwindigkeit. Kleine Störungen wirken sich dabei durch das Integrieren der Kurven nicht so stark aus wie bei dem Schwellenwertverfahren

Zur Realisierung einer Zweifachmessung müssen bei dem Schwerpunktverfahren zwei unabhängige Meßsysteme eingesetzt werden, da jedes Meßsystem nur eine Geschwindigkeit liefern kann. Vorzugsweise werden hierzu die Induktionsschleifen 1,2 (Fig.1) mit jeweils zwei Auswertevorrichtungen 6,10 bzw.7,11 verbunden. Die jeweils an einer Induktionsschleife liegenden Auswertevorrichtungen erzeugen dabei völlig getrennte Meßsignale, die (je nach Gerätekonfiguration) allerdings einen Mindestfrequenzabstand von z.B. 1kHz voneinander aufweisen müssen. Auch die Auswertung der Schleifenbedämpfung erfolgt getrennt voneinander.

Selbstverständlich ist es auch möglich, statt einer Zweifachmessung eine Dreifach- oder Vierfachmessung etc. durchzuführen. In diesen Fällen werden dann drei oder vier etc. mit unterschiedlicher Meßfrequenz arbeitende Auswertevorrichtungen mit jeweils einer Induktionsschleife verbunden.

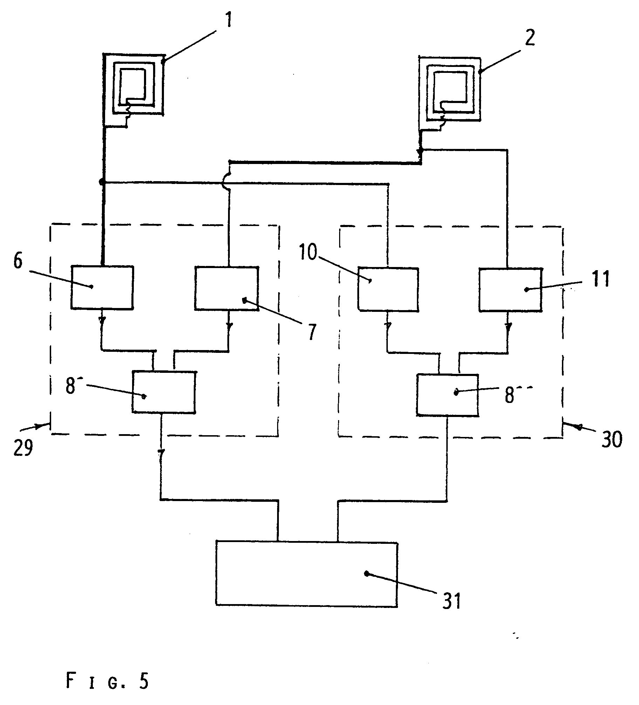

Die Anzahl der zur Geschwindigkeitsbestimmung erforderlichen Induktionsschleifen kann auch mehr als zwei Schleifen umfassen. Dieses ist in den Figuren 4a) bis 4c) angedeutet. Dabei zeigt Fig.4a) noch einmal die beiden in Fahrtrichtung 3 hintereinander angeordneten Schleifen 1 und 2 (eine Meßbasis).

Fig.4b) gibt eine Induktionsschleifenanordnung mit drei Schleifen 1, 2 und 27 an, die 3 Meßbasen definieren (Abstände zwischen den Induktionsschleifen 1 und 2, 2 und 3 sowie 1 und 3). Schließlich zeigt Fig.4c) vier hintereinander angeordnete Induktionsschleifen 1, 2, 27 und 28, die insgesamt sechs Meßbasen definieren.

Um die Messung noch sicherer zu machen, können Schwerpunktverfahren und Schwellenwertverfahren auch miteinander gekoppelt werden, wobei durch Verwendung mehrerer übereinander angeordneter Schwellen eine überprüfung des Schwerpunktverfahrens erfolgt.

Selbstverständlich kann statt der jeweiligen Vorderflanke der Überfahrkurven 22, 23 auch die jeweilige Rückflanke zur Ableitung von Zeitbezugswerten verwendet werden. In diesem Fall werden immer dann Zeitbezugswerte ausgelöst, wenn die jeweilige Überfahrkurve die Schwellenwerte unterschreitet. Für eine Zweifachmessung können auch beide Flanken zur Erzeugung von Zeitbezugswerten herangezogen werden, so daß, anders als bei dem Schwerpunktverfahren, kein zusätzliches Meßsystem erforderlich ist.

In Fig.5 ist ein Ausführungsbeispiel für eine Zweifachmessung der Geschwindigkeit mit zwei voneinander unabhängigen Zeitbasen dargestellt. Im wesentlichen entspricht die Meßvorrichtung der in Fig.1 dargestellten Vorrichtung. Allerdings werden die Auswertevorrichtungen 6 und 7 bzw. 10 und 11 jeweils mit einem eigenen Microcontroller 8' bzw. 8" verbunden und bilden zwei getrennte Meßsysteme 29 und 30. Die Periodendauer (oder ein daraus abgeleiteter Wert) der Impulse des Taktgenerators des jeweiligen Microcontrollers 8' bzw. 8" definiert dabei die Zeitbasis für die mit dem jeweiligen Controller 8' bzw. 8" ermittelten Geschwindigkeiten $v_1$ bzw. $v_2$.

Die Meßsysteme 29 und 30 sind mit einer weiteren Auswerteeinheit 31 verbunden, die den Vergleich der beiden Geschwindigkeitsmeßwerte $v_1$ und $v_2$ durchführt, diese Werte gegebenenfalls weiterverarbeitet und zur Anzeige bringen.

## Patentansprüche

1. Verfahren zur Bestimmung der Geschwindigkeit ($v = s/\delta t$) von Fahrzeugen, wobei mit Hilfe von mindestens zwei im Abstand (s) zueinander angeordneter Sensoren (1,2,27,28) die zum überfahren beider Sensoren (1,2,27,28) benötigte Zeit $\delta t = t_1 - t_2$ ermittelt wird, **dadurch gekennzeichnet**, daß als Sensoren (1,2,27,28) Induktionsspulen verwendet werden, daß zur Bestimmung der zum Überfahren beider Induktionsspulen (1,2,27,28) benötigten Zeit ($\delta t$) die zeitlichen Verläufe der jeweiligen Spulenimpedanzen -bzw. der den Spulenimpedanzen proportionalen Meßspannungen(Überfahrkurve)(22,23) für eine vorgegebene Frequenz gemessen und hieraus die Zeitbezugswerte ($t_1, t_2$) abgeleitet werden.

2. Verfahren nach Anspruch 1, **dadurch gekennzeichnet**, daß der jeweilige Schwerpunkt (25,26) der entsprechenden Überfahrkurve (22,23) ermittelt und der diesem Wert zugeordnete Zeitwert ($t_{s1}, t_{s2}$) als Zeitbezugswert für die Bestimmung der zum Überfahren beider Induktionsspulen (1,2,27,28) benötigten Zeit ($\delta t$) verwendet wird.

3. Verfahren nach Anspruch 1 oder 2, **dadurch gekennzeichnet**, daß eine Mehrfachmessung der Fahrzeuggeschwindigkeit vorgenommen wird, und daß hierzu jede Spulenimpedanz mit einer entsprechenden Anzahl von Spannungssignalen unterschiedlicher Frequenzen gemessen wird.

4. Vorrichtung zur Bestimmung der Geschwindigkeit (v) von Fahrzeugen mit Hilfe von mindestens zwei im Abstand (s) zueinander angeordneter Induktionsschleifen (1,2,27,28), welche über Verbindungsleitungen (4,5) mit jeweils mindestens einer Auswertevorrichtung (6,7,10,11,) verbunden sind, **dadurch gekennzeichnet**, daß die jeweilige Auswertevorrichtung (6,7,10,11) aus einer Impedanzmeßvorrichtung besteht, die eine Meßspannungsquelle (12) zur Erzeugung einer Wechselspannung vorgebbarer Frequenz (Meßfrequenz) und einen Detektor (14) zur Messung der Schleifenspannung enthält, und daß der Detektor (14) im wesentlichen aus einem Synchrongleichrichter (16) mit nachgeschaltetem Tiefpaßfilter (17) besteht, wobei der jeweilige Steuereingang (18) des Synchrongleichrichters (16) ebenfalls mit der Meßspannungsquelle (12) verbunden ist.

5. Vorrichtung nach Anspruch 4, **dadurch gekennzeichnet**, daß zwischen Meßspannungsquelle (12) und Induktionsschleife (1,2,27,28) eine Schleifenendstufe (13) vorgesehen ist, die im wesentlichen einen Signalverstärker mit einem hochohmigen Ausgangswiderstand enthält.

6. Vorrichtung nach Anspruch 5, **dadurch gekennzeichnet**, daß die Schleifenendstufe (13) zusätzlich einen Phasenschieber zur Veränderung der Phase der an der Induktionsschleife (1,2,27,28) liegenden Schleifenspannung aufweist.

**7.** Vorrichtung nach Anspruch 6, **dadurch gekennzeichnet**, daß der Phasenschieber durch einen Prozessor steuerbar ist.

**8.** Vorrichtung nach einem der Ansprüche 4 bis 7, **dadurch gekennzeichnet**, daß der Synchrongleichrichter (16) als Analogmultiplizierer ausgebildet ist.

**9.** Vorrichtung nach einem der Ansprüche 4, 5 oder 8, **dadurch gekennzeichnet**, daß es sich bei dem Synchrongleichrichter (16) um einen phasenunabhängigen Synchrongleichrichter handelt.

**10.** Vorrichtung nach einem der Ansprüche 4 bis 9, **dadurch gekennzeichnet**, daß zwischen Induktionsschleife (1,2,27,28) und Synchrongleichrichter (16) ein Signalspannungsverstärker (15) angeordnet ist.

**11.** Vorrichtung nach einem der Ansprüche 4 bis 10, **dadurch gekennzeichnet**, daß der Ausgang des dem Synchrongleichrichter (16) nachgeschalteten Tiefpaßfilters (17) zur weiteren Auswertung der gemessenen Schleifensignale mit einem Microcontroller (8,8',8") verbunden ist.

**12.** Vorrichtung nach einem der Ansprüche 4 bis 11, **dadurch gekennzeichnet**, daß im Falle einer Mehrfachmessung der Fahrzeuggeschwindigkeit jede Induktionsschleife (1,2,27,28) mit einer entsprechenden Anzahl von Auswertevorrichtungen (6,7,10,11) verbunden ist, wobei jede einer Induktionsschleife (1,2,27,28) zugeordnete Auswertevorrichtung (6,7,10,11) mit einer unterschiedlichen Meßfrequenz arbeitet.

**13.** Vorrichtung nach Anspruch 12, **dadurch gekennzeichnet**, daß die bei der Mehrfachmessung zur Ermittlung jeweils eines Geschwindigkeitswertes erforderlichen Auswertevorrichtungen (6,7;10,11) mit einem eigenen Microcontroller (8',8") verbunden sind, und daß den einzelnen Microcontrollern (8',8") eine weitere Auswerteeinheit (31) nachgeschaltet ist.

F ɪ ɢ. 1

F ɪ ɢ. 2

F I G. 3

F I G. 4A)

F I G. 4B)

F I G. 4C)

F I G. 5

Europäisches
Patentamt

## EUROPÄISCHER RECHERCHENBERICHT

Nummer der Anmeldung

EP 95 11 0957

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | GB-A-2 056 688 (N.V. PHILIPS' GLOEILAMPENFABRIEKEN) * das ganze Dokument * --- | 1 | G08G1/052 G01P3/66 |
| Y A | US-A-3 685 013 (BRICKNER) * Spalte 2, Zeile 20 - Spalte 5, Zeile 34; Abbildungen 1,2 * --- | 1 5-9 | |
| A | DE-A-26 48 383 (VOLKSWAGENWERK AG) * das ganze Dokument * --- | 1 | |
| A | GB-A-1 271 643 (THE PLESSEY COMPANY LIMITED) * das ganze Dokument * ----- | 3,12 | |

**RECHERCHIERTE SACHGEBIETE (Int.Cl.6)**

G08G
G01P

Der vorliegende Recherchenbericht wurde für alle Patentansprüche erstellt

| Recherchenort | Abschlußdatum der Recherche | Prüfer |
|---|---|---|
| DEN HAAG | 24.November 1995 | Reekmans, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
    Dokument

EPO FORM 1503 03.82 (P04C03)